# EUROPÄISCHE PATENTSCHRIFT

(11) **EP 4 159 004 B1**
(45) Veröffentlichungstag und Bekanntmachung des Hinweises auf die Patenterteilung: **08.07.2026**
(21) Anmeldenummer: 21726133.8
(22) Anmeldetag: 20.05.2021
(51) Int. Cl.: H05B 6/12

(54) **UNTERLEGVORRICHTUNG UND VERFAHREN ZUR VERWENDUNG EINER UNTERLEGVORRICHTUNG**
UNDERLAY ARRANGEMENT AND METHOD FOR USING AN UNDERLAY ARRANGEMENT
AGENCEMENT SOUS-JACENT ET PROCÉDÉ D'UTILISATION D'UN AGENCEMENT SOUS-JACENT

(30) Priorität: 28.05.2020 EP 20382455
(43) Veröffentlichungstag der Anmeldung: 05.04.2023
(73) Patentinhaber: BSH Hausgeräte GmbH, 81739 München (DE)
(72) Erfinder: ABADIA DURANGO, Jose Antonio, 50007 Zaragoza (ES); CABEZA GOZALO, Tomas, 50010 Zaragoza (ES); HERNANDEZ BLASCO, Pablo Jesus, 50019 Zaragoza (ES); LASOBRAS BERNAD, Javier, 50016 Ejea de los Caballeros (Zaragoza) (ES); LLORENTE GIL, Sergio, 50009 Zaragoza (ES); RIVERA PEMAN, Julio, 50410 Cuarte de Huerva (Zaragoza) (ES)
(86) Internationale Anmeldenummer: PCT/EP2021/063430
(87) Internationale Veröffentlichungsnummer: WO 2021/239563

(56) Entgegenhaltungen:
- EP-A1- 2 662 004
- EP-A1- 3 383 134
- EP-A1- 3 490 340
- EP-B1- 2 662 004
- WO-A1-2015/124883
- WO-A1-2017/052282
- WO-A1-2019/130180

## Beschreibung

Die Erfindung betrifft eine Unterlegvorrichtung zur Verwendung mit einem Kochfeld nach dem Oberbegriff des Anspruchs 1 und ein Verfahren zur Verwendung einer Unterlegvorrichtung mit einem Kochfeld nach dem Oberbegriff des Anspruchs 12.

Aus dem Stand der Technik ist bekannt, zur Unterstützung einer Platzierung von Gargeschirr relativ zu Kochzonen von Kochfeldern Kochfeldplatten und/oder Arbeitsplatten mit Markierungen, beispielsweise Gravuren, auszustatten, welche die Kochzonen abbilden. Dies hat jedoch insbesondere bei Kochfeldern, welche keine Kochfeldplatten aufweisen und bei denen das Gargeschirr direkt auf einer Arbeitsplatte platziert wird, den Nachteil, dass eine Designfreiheit der Arbeitsplatte eingeschränkt ist. Ferner können Fertigungs- und Montagetoleranzen von Heizeinheiten des Kochfelds trotz der Markierungen zu einer fehlerhaften Platzierung von Gargeschirr führen, da keine exakte Überlappung der Kochzonen und Markierungen gewährleistet werden kann. Ein Beispiel ist bekannt aus EP 3383134 A1, der ein Kochsystem und ein Verfahren zu einer Positionierung eines Kochgeschirrelements aufweist.

Die Aufgabe der Erfindung besteht insbesondere, aber nicht beschränkt darauf, darin, eine gattungsgemäße Vorrichtung mit verbesserten Eigenschaften hinsichtlich eines Benutzerkomforts bereitzustellen. Die Aufgabe wird erfindungsgemäß durch die Merkmale der Ansprüche 1 und 10 gelöst, während vorteilhafte Ausgestaltungen und Weiterbildungen der Erfindung den Unteransprüchen entnommen werden können.

Die Erfindung geht aus von einer Unterlegvorrichtung zur Verwendung mit einem Kochfeld, insbesondere mit einem Induktionskochfeld, mit einer Unterlegeinheit, welche zu einer Platzierung zwischen einem Gargeschirr und einer Kochzone des Kochfelds vorgesehen ist.

Es wird vorgeschlagen, dass die Unterlegvorrichtung eine Platzierhilfe aufweist, welche zur Unterstützung einer Platzierung der Unterlegeinheit relativ zu der Kochzone vorgesehen ist.

Durch eine derartige Ausgestaltung kann insbesondere eine Designfreiheit einer Arbeitsplatte und/oder einer Kochfeldplatte erhöht werden. Vorteilhaft kann auf ein Ausstatten der Arbeitsplatte und/oder der Kochfeldplatte mit Markierungen zur Unterstützung der Platzierung der Unterlegeinheit relativ zu der Kochzone verzichtet werden. Ferner kann eine einfache und leicht austauschbare Konstruktion der Platzierhilfe erreicht werden. Vorteilhaft kann bei einer Beschädigung der Platzierhilfe eine Demontage der Arbeitsplatte und/oder Kochfeldplatte vermieden werden. Besonders vorteilhaft kann dieselbe Unterlegvorrichtung mit verschiedenen Kochfeldern verwendet werden, um jeweils eine korrekte Platzierung von Gargeschirr zu gewährleisten. Bevorzugt kann auf eine hohe Präzision bei der Fertigung und Montage des Kochfelds und der Arbeitsplatte verzichtet werden, da keine exakte Überlappung von Markierungen der Arbeitsplatte und/oder Kochfeldplatte und Kochzonen des Kochfelds notwendig ist.

Unter einer "Unterlegvorrichtung" soll insbesondere eine Vorrichtung verstanden werden, welche zu einem Auflegen, vorteilhaft zu einer Platzierung, auf einer Arbeitsplatte und/oder Kochfeldplatte und zu einem Aufstellen zumindest eines Gargeschirrs vorgesehen ist und welche insbesondere in einem Heizbetriebszustand eine Unterlage für das beheizte Gargeschirr wenigstens teilweise ausbildet. Bevorzugt ist die Unterlegvorrichtung plattenförmig ausgebildet. Darunter, dass eine Einheit "plattenförmig" ist, soll insbesondere verstanden werden, dass die Einheit eine Dicke aufweist, die maximal 50 %, insbesondere maximal 20 %, vorteilhaft maximal 10 %, vorzugsweise maximal 5 %, einer Länge und/oder einer Breite der Einheit entspricht. Vorzugsweise weist die Unterlegvorrichtung zumindest eine, vorzugsweise zumindest zwei, insbesondere einander gegenüberliegende, Seiten auf, die eine ebene, insbesondere glatte, Oberfläche aufweisen. Denkbar wäre, dass die Unterlegvorrichtung spröde ausgebildet ist. Vorteilhaft ist die Unterlegvorrichtung flexibel ausgebildet. Darunter, dass eine Einheit "flexibel" ist, soll insbesondere verstanden werden, dass die Einheit zerstörungsfrei biegbar, insbesondere faltbar und/oder knickbar, ist.

Ferner weist vorteilhaft die Unterlegeinheit und besonders vorteilhaft die gesamte Unterlegvorrichtung eine Temperaturbeständigkeit von zumindest 300°C auf. Unter einer "Temperaturbeständigkeit" einer Einheit und/oder eines Elements und/oder eines Materials soll insbesondere eine elementspezifische und/oder materialspezifische maximale und/oder minimale Temperatur verstanden werden, welcher die Einheit und/oder das Element und/oder das Material, insbesondere dauerhaft und unmittelbar, ausgesetzt werden kann, ohne dass sich hierdurch die für eine Funktionsfähigkeit der Einheit und/oder des Elements und/oder des Materials zu einer Erfüllung einer vorgesehenen Funktion maßgeblichen Einheits- und/oder Element- und/oder Materialeigenschaften über ein, für die vorgesehene Anwendung und/oder Funktion der Einheit und/oder des Elements und/oder des Materials, tolerierbares Maß hinaus verändern. Insbesondere ist die Einheit und/oder das Element und/oder das Material bei der Temperatur, welche die Temperaturbeständigkeit der Einheit und/oder des Elements und/oder des Materials definiert, funktionsfähig und/oder unbeeinträchtigt und/oder unbeschädigt. Vorzugsweise ist zumindest die Unterlegeinheit und vorteilhaft die gesamte Unterlegvorrichtung wärmeisolierend. Darunter, dass eine Einheit "wärmeisolierend" ist soll insbesondere verstanden werden, dass die Einheit bei 0°C eine Wärmeleitfähigkeit von insbesondere höchstens 10 W/m*k und vorteilhaft höchstens 1 W/m*k aufweist. Beispielsweise könnte die Unterlegvorrichtung Holz und/oder Kork und bevorzugt ein Hochtemperatur-Polymer, insbesondere ein Hochtemperatur-Silikon, aufweisen, bevorzugt besteht die Unterlegvorrichtung zu einem Großteil aus Holz oder Kork und bevorzugt zu einem Großteil aus dem Hochtemperatur-Polymer, insbesondere dem Hochtemperatur-Silikon.

Bevorzugt weist die Unterlegvorrichtung zumindest eine Elektronikeinheit auf. Unter einer "Elektronikeinheit" soll insbesondere eine Einheit verstanden werden, welche zumindest ein elektrisches und/oder elektronisches Bauteil aufweist und/oder welche zumindest eine elektrische und/oder elektronische Einheit aufweist. Das elektrische und/oder elektronische Bauteil könnte beispielsweise ein elektrisches Widerstandsbauteil und/oder ein Sender und/oder ein Sensor und/oder ein Empfänger und/oder eine Spule und/oder eine Diode und/oder eine Kapazität sein. Die elektrische und/oder elektronische Einheit könnte beispielsweise eine Bedieneinheit und/oder eine Steuereinheit und/oder eine Kommunikationseinheit sein. Besonders bevorzugt weist die Unterlegvorrichtung einen Überhang auf, welcher in einem Betriebszustand frei von aufgelegten Gargeschirren und insbesondere einstückig mit der Unterlegeinheit ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Alternativ könnten die Funktionseinheit und der Überhang über eine Steckverbindung und/oder Schraubverbindung und/oder Schnappverbindung miteinander verbunden sein. Beispielsweise könnte der Überhang eine Anzeigeeinheit, insbesondere zu einer Temperaturanzeige, und/oder ein Bedienfeld zu einem Bedienen der Elektronikeinheit und/oder ein Griffelement zu einem Ergreifen der Unterlegvorrichtung aufweisen.

Unter einem "Kochfeld" soll insbesondere eine Einheit verstanden werden, welche zumindest eine Heizeinheit und eine Versorgungseinheit und eine Kochfeld-Steuereinheit aufweist, welche insbesondere dazu vorgesehen ist, in dem Heizbetriebszustand die Versorgungseinheit insbesondere zu einer Versorgung der Heizeinheit mit Energie, insbesondere mit elektrischer Energie, anzusteuern, wobei die Heizeinheit in dem Heizbetriebszustand in Abhängigkeit einer Versorgung durch die Versorgungseinheit insbesondere zu einer Bereitstellung von Energie, insbesondere von elektromagnetischer Energie, an wenigstens ein Gargeschirr, insbesondere an das Gargeschirr, vorgesehen ist. Denkbar wäre, dass das Kochfeld eine Kochfeldplatte aufweist und in einer Ausnehmung der Arbeitsplatte montierbar ist. Vorzugsweise ist das Kochfeld frei von Kochfeldplatten. Besonders bevorzugt weist das Kochfeld eine Gehäuseeinheit auf, mittels welcher das Kochfeld an einer Unterseite der Arbeitsplatte montierbar ist. Insbesondere ist die Unterlegvorrichtung als eine separate Einheit ausgebildet, wodurch insbesondere eine hohe Flexibilität erreicht werden kann. Insbesondere kann die Unterlegeinheit der als separate Einheit ausgebildeten Unterlegvorrichtung an einer beliebigen Position auf der Arbeitsplatte und/oder Kochfeldplatte positioniert werden. Die Unterlegvorrichtung ist insbesondere von dem Kochfeld verschieden und vorteilhaft relativ zu dem Kochfeld beweglich. Insbesondere ist die Unterlegvorrichtung zu einer Verwendung mit dem Kochfeld und vorzugsweise mit verschiedenen Kochfeldern vorgesehen. Das Kochfeld ist insbesondere zu einer Verwendung mit zumindest einer Unterlegvorrichtung und vorteilhaft wenigstens im Wesentlichen zeitgleich mit zumindest zwei, vorteilhaft mit zumindest drei und vorzugsweise mit zumindest vier Unterlegvorrichtungen vorgesehen. Unter einer "Heizeinheit" soll in diesem Zusammenhang insbesondere eine Einheit verstanden werden, welche dazu vorgesehen ist, Energie, vorzugsweise elektrische Energie, in Wärme umzuwandeln und insbesondere zumindest einem Gargeschirr zuzuführen. Vorteilhaft ist die Heizeinheit als Induktionsheizeinheit ausgebildet.

Beispielsweise könnte die Unterlegeinheit eine wenigstens im Wesentlichen n-eckige, wie beispielsweise eine quadratische und/oder rechteckige, und/oder ovale, wie beispielsweise eine ellipsenförmige, Gestalt aufweisen. Vorteilhaft weist die Unterlegeinheit eine wenigstens im Wesentlichen kreisförmige und/oder scheibenförmige Gestalt auf. Insbesondere weist die Unterlegeinheit einen Durchmesser in einem Bereich von 120 mm bis 320 mm, insbesondere von 140 mm bis 280 mm, vorteilhaft von 160 mm bis 240 mm und vorzugsweise von 180 mm bis 210 mm auf. Insbesondere weist die Unterlegeinheit eine Dicke in einem Bereich von 0,5 mm bis 3,5 mm, insbesondere von 1 mm bis 3 mm, vorteilhaft von 1,5 mm bis 2,5 mm und vorzugsweise von 1,75 mm bis 2,25 mm auf. Insbesondere könnte die Unterlegeinheit zumindest eine Ausnehmung und vorteilhaft zumindest einen Hohlraum aufweisen, welche/welcher insbesondere zu einer Aufnahme wenigstens eines Teils der Elektronikeinheit vorgesehen sein könnte. Die Unterlegeinheit ist insbesondere dazu vorgesehen, in dem Heizbetriebszustand die Arbeitsplatte und/oder die Kochfeldplatte und das beheizte Gargeschirr insbesondere physikalisch voneinander zu beabstanden. Insbesondere ist die Unterlegeinheit dazu vorgesehen, in dem Betriebszustand eine Verbindung zwischen dem beheizten Gargeschirr und der Arbeitsplatte und/oder Kochfeldplatte wenigstens im Wesentlichen herzustellen und/oder zumindest an einer Verbindung zwischen dem beheizten Gargeschirr und der Arbeitsplatte und/oder Kochfeldplatte mitzuwirken. Die Unterlegeinheit ist insbesondere zu einem Aufstellen von verschiedenen Gargeschirren vorgesehen. Beispielsweise könnte die Unterlegeinheit zu einem Aufstellen von Gargeschirren verschiedener Größe und/oder verschiedenen Durchmessers vorgesehen sein. Die Unterlegeinheit könnte insbesondere zu einem Aufstellen von Gargeschirr mit einem Durchmesser vorgesehen sein, welcher insbesondere größer ist als ein Durchmesser der Unterlegeinheit. Der Betriebszustand könnte insbesondere zeitlich vor dem Heizbetriebszustand und/oder mit dem Heizbetriebszustand wenigstens teilweise überlappend angeordnet sein. Unter einem "Heizbetriebszustand" soll insbesondere ein Zustand verstanden werden, in welchem insbesondere eine Beheizung des Gargeschirrs erfolgt. Insbesondere stellt in dem Heizbetriebszustand ein unterhalb der Arbeitsplatte und/oder Kochfeldplatte angeordnetes Kochfeld eine Heizenergie bereit. Das Kochfeld weist insbesondere zumindest eine Heizeinheit auf, welche insbesondere dazu vorgesehen ist, die Heizenergie bereitzustellen. Das Kochfeld weist insbesondere eine Kochfeld-Steuereinheit auf, welche insbesondere dazu vorgesehen ist, in dem Heizbetriebszustand eine Energiezufuhr zu der Heizeinheit zu steuern und/oder zu regeln. Insbesondere ist in dem Heizbetriebszustand zumindest die Unterlegeinheit auf der Arbeitsplatte und/oder Kochfeldplatte aufgelegt. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Außengehäuses, insbesondere des Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Unter einer "Arbeitsplatte" soll insbesondere eine Einheit verstanden werden, auf welcher insbesondere eine Vorbereitung und/oder eine Bearbeitung von Lebensmitteln erfolgt und/oder welche insbesondere zu einer Ablage und/oder zu einem Aufstellen von wenigstens einer Arbeitsutensilie, insbesondere einer Küchenutensilie, vorgesehen ist. Die Arbeitsutensilie könnte beispielsweise ein Gargeschirr und/oder eine Backform und/oder eine Schüssel und/oder ein Küchengerät und/oder ein Messer und/oder ein Löffel und/oder eine Gabel und/oder ein Küchengeschirr und/oder ein Backgeschirr und/oder ein Zubereitungsbrett und/oder ein Küchenarbeitsbrett, wie beispielsweise ein Schneidebrett, sein. Die Arbeitsplatte könnte insbesondere wenigstens zu einem Großteil aus Schichtstoff und/oder aus Laminat und/oder aus Naturstein und/oder aus Kunststein und/oder aus Mineralwerkstoff und/oder aus Massivholz und/oder aus Echtholz und/oder aus Keramik und/oder aus Beton und/oder aus Glas bestehen.

Die Platzierhilfe kann insbesondere an einer Oberseite und/oder an einer Unterseite oder vollständig in einem Innenbereich der Unterlegeinheit angeordnet sein. Vorzugsweise weist die Unterlegeinheit eine Aufnahme für die Platzierhilfe auf, welche zur Oberseite und/oder Unterseite hin offen oder vollständig geschlossen sein könnte. Denkbar wäre, dass die Platzierhilfe dazu vorgesehen ist, einem Benutzer Hinweise zu einer vordefinierten Position der Unterlegeinheit relativ zu der Kochzone auszugeben. Vorzugsweise entspricht die vordefinierte Position einer Position, welche bei einem Auflegen eines Gargeschirrs auf die Unterlegeinheit eine optimale Beheizung des Gargeschirrs gewährleistet. Bevorzugt sind in der vordefinierten Position bei einer senkrechten Betrachtung auf eine Haupterstreckungsebene der Unterlegeinheit ein Mittelpunkt der Unterlegeinheit und ein Mittelpunkt der Kochzone identisch zueinander. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Beispielsweise könnte die Platzierhilfe einen Empfänger und/oder Transmitter, insbesondere einen RFID-Chip und/oder Bluetooth-Chip und/oder IR-Chip aufweisen, welcher bei der vordefinierten Position der Unterlegeinheit relativ zu der Kochzone ein akustisches und/oder optisches Signal an den Benutzer ausgibt.

Unter "vorgesehen" soll insbesondere speziell ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Vorstellbar wäre, dass die Platzierhilfe in einem Randbereich der Unterlegeinheit angeordnet ist. Beispielsweise könnte die Platzierhilfe als ein hervorstehender Rand der Unterlegeinheit ausgebildet sein, welcher dazu vorgesehen ist, in eine korrespondierende Einbuchtung der Arbeitsplatte und/oder Kochfeldplatte einzugreifen. Um eine korrekte Platzierung der Unterlegeinheit zu vereinfachen, wird vorgeschlagen, dass die Platzierhilfe, insbesondere bei der senkrechten Betrachtung auf die Haupterstreckungsebene der Unterlegeinheit, in einem Zentralbereich der Unterlegeinheit angeordnet ist. Unter einem "Zentralbereich" soll in diesem Zusammenhang insbesondere ein Teilbereich eines Zylinders, welcher die Einheit gerade noch aufnimmt, verstanden werden, welcher sich bei der senkrechten Betrachtung auf eine Haupterstreckungsebene des Zylinders von einem Mittelpunkt des Zylinders um höchstens 20 %, vorteilhaft um höchstens 15 % und besonders vorteilhaft um höchstens 10 % einer Ausdehnung des Zylinders entlang einer beliebigen Richtung in die Richtung erstreckt. Besonders vorteilhaft ist die Platzierhilfe konzentrisch zu der Unterlegeinheit angeordnet. Hierdurch kann insbesondere eine korrekte Platzierung der Unterlegeinheit durch ein intuitives Anordnen der Mittelpunkte der Kochzone und der Unterlegeinheit übereinander erreicht werden.

Ferner wird vorgeschlagen, dass die Platzierhilfe zur Unterstützung der Platzierung in der vordefinierten Position der Unterlegeinheit relativ zu der Kochzone eine Haltekraft bereitstellt. Darunter, dass die Platzierhilfe eine "Haltekraft" bereitstellt, soll insbesondere verstanden werden, dass die Platzierhilfe in der vordefinierten Position eine Kraft bereitstellt, welche einem Verschieben der Unterlegeinheit entgegenwirkt. Vorzugsweise unterscheidet sich die Haltekraft von einer Klebekraft. Denkbar wäre, dass die Platzierhilfe die Unterlegeinheit durch die Haltekraft unlösbar oder nur durch ein Werkzeug lösbar in der vordefinierten Position hält. Bevorzugt ist die Haltekraft durch einen Benutzer händisch überwindbar. Insbesondere beträgt die Haltekraft maximal 10 N und vorteilhaft maximal 5 N. Hierdurch kann insbesondere ein noch einfacheres und intuitives Platzieren der Unterlegeinheit erreicht werden. Vorteilhaft kann die Unterlegeinheit einfach über die Arbeitsplatte und/oder Kochfeldplatte bewegt werden, bis die Unterlegeinheit durch die Platziereinheit an der vordefinierten Position festgehalten wird.

Möglich wäre, dass die Haltekraft als eine Reibungskraft ausgebildet ist. Um eine Konstruktion der Unterlegeinheit zu vereinfachen, wird vorgeschlagen, dass die Platzierhilfe zumindest ein magnetisches Halteelement, insbesondere ein ferri- oder ferromagnetisches Halteelement, aufweist, welches zur Bereitstellung der Haltekraft vorgesehen ist. Beispielsweise könnte das Halteelement als ein Ferrit, insbesondere ein Strontium-Ferrit oder ein Barium-Ferrit, ausgebildet sein. Insbesondere kann die Platzierhilfe eine beliebige Anzahl an Halteelementen aufweisen, welche insbesondere zueinander unterschiedlich ausgebildet sein können und vorzugsweise gemeinsam eine Halteeinheit zur Bereitstellung der Haltekraft ausbilden. Vorteilhaft weist das Halteelement eine Curie-Temperatur von mindestens 300°C, besonders vorteilhaft mindestens 400°C und bevorzugt zumindest 500°C auf. Hierdurch kann insbesondere auf ein Ausstatten der Unterlegeinheit mit Rändern oder Vorsprüngen zur Bereitstellung der Haltekraft verzichtet werden. Vorteilhaft kann die Platzierhilfe unabhängig von einer Größe der Kochzone verwendet werden.

Vorteilhaft ist das Halteelement als ein Permanentmagnet, insbesondere ein SmCo-Magnet, ausgebildet. Hierdurch kann insbesondere die Haltekraft vergrößert werden. Vorteilhaft kann eine hitzebeständige Platzierhilfe bereitgestellt werden. Alternativ könnte das Halteelement auch als ein AlNiCo-Magnet ausgebildet sein.

Weiterhin wird vorgeschlagen, dass die Unterlegvorrichtung ein Abschirmelement aufweist, welches zwischen der Platzierhilfe und einer Gargeschirrauflagefläche der Unterlegeinheit angeordnet und dazu vorgesehen ist, die Platzierhilfe elektromagnetisch abzuschirmen. Darunter, dass das Abschirmelement die Platzierhilfe "elektromagnetisch abschirmt" soll in diesem Zusammenhang insbesondere verstanden werden, dass das Abschirmelement eine Beeinflussung von oberhalb der Gargeschirrauflagefläche angeordneten Objekten, insbesondere dem Gargeschirr, durch ein elektromagnetisches Feld der Platzierhilfe verhindert. Das Abschirmelement könnte beispielsweise ein Mu-Metall und/oder einen Ferrit aufweisen. Hierdurch kann insbesondere ein Benutzerkomfort weiter gesteigert werden. Vorteilhaft kann ein Haften der Unterlegeinheit an Gargeschirren vermieden werden.

Ferner wird ein System vorgeschlagen, mit der Unterlegvorrichtung und mit dem Kochfeld. Hierdurch kann eine Platzierung von Gargeschirr auf dem Kochfeld auf eine einfache und intuitive Weise unterstützt werden. Vorteilhaft kann ein Einfluss von Fertigungs- und Montagetoleranzen des Kochfelds auf eine Genauigkeit der Platzierung der Unterlegeinheit vermieden werden.

Zudem wird vorgeschlagen, dass das Kochfeld eine weitere Platzierhilfe aufweist, welche dazu vorgesehen ist, gemeinsam mit der Platzierhilfe die Unterstützung der Platzierung der Unterlegeinheit relativ zu der Kochzone bereitzustellen. Die weitere Platzierhilfe könnte beispielsweise einen Empfänger und/oder Transmitter, insbesondere einen RFID-Chip und/oder Bluetooth-Chip und/oder IR-Chip aufweisen. Vorzugsweise weist die weitere Platzierhilfe ein zu dem Halteelement der Platzierhilfe korrespondierendes weiteres Halteelement auf. Beispielsweise könnte das weitere Halteelement zu dem Halteelement identisch ausgebildet sein. Vorteilhaft sind das Halteelement und das weitere Halteelement als Permanentmagneten ausgebildet. Alternativ könnte das Halteelement zu dem weiteren Halteelement unterschiedlich ausgebildet sein. Insbesondere könnte eines der Halteelemente als ein Ferrit und ein anderes der Halteelemente als ein Permanentmagnet ausgebildet sein. Bevorzugt stellt das Halteelement die Haltekraft bei einem Abstand des Halteelements und des weiteren Halteelements von bis zu 4 mm, vorteilhaft von bis zu 6 mm und besonders vorteilhaft von bis zu 8 mm bereit. Insbesondere ist der Abstand, bis zu welchem das Halteelement die Haltekraft bereitstellt, an eine Dicke der Arbeitsplatte und/oder Kochfeldplatte angepasst, beispielsweise könnte eine Größe und/oder Position und/oder Magnetstärke des Halteelements und/oder des weiteren Halteelements je nach Anwendungsbereich unterschiedlich sein. Insbesondere kann ein Kochfeld mehrere unterschiedliche weitere Platzierhilfen aufweisen, welche beispielsweise unterschiedlich großen Kochzonen zugeordnet sein könnten und mit unterschiedlichen Platzierhilfen korrespondieren. Hierdurch kann insbesondere eine einfache Verwendung der Unterlegvorrichtung erreicht werden. Vorteilhaft kann auf eine zusätzliche Montage der weiteren Platzierhilfe an dem Kochfeld verzichtet werden.

Denkbar wäre, dass die weitere Platzierhilfe als eine Beschichtung einer Unterseite der Arbeitsplatte und/oder der Kochfeldplatte ausgebildet sein könnte. Um eine einfache Ausgestaltung und Anordnung der weiteren Platzierhilfe zu erreichen, wird vorgeschlagen, dass das Kochfeld eine Heizeinheit aufweist, wobei die weitere Platzierhilfe, insbesondere bei einer senkrechten Betrachtung auf eine Haupterstreckungsebene der Heizeinheit, in einem Zentralbereich der Heizeinheit angeordnet ist. Insbesondere ist die Heizeinheit der Kochzone zugeordnet. Denkbar wäre, dass die Heizeinheit als eine Strahlungsheizeinheit ausgebildet ist. Bevorzugt ist die Heizeinheit als ein Heizinduktor ausgebildet. Beispielsweise könnte die Heizeinheit in der senkrechten Betrachtung eine ovale, insbesondere kreisförmige, oder eine rechteckige, insbesondere quadratische, Form aufweisen. Bevorzugt ist die weitere Platzierhilfe in der senkrechten Betrachtung vollständig von der Heizeinheit umgeben. Hierdurch kann insbesondere eine effektive Nutzung vorhandener Leerräume der Heizeinheit erreicht werden. Es wäre vorstellbar, dass der Kochzone mehrere Heizeinheiten zugeordnet sind, wobei die weitere Platzierhilfe bei der senkrechten Betrachtung in einem gemeinsamen Mittelpunkt aller der Kochzone zugeordneten Heizeinheiten angeordnet sein könnte.

Darüber hinaus wird vorgeschlagen, dass das System die Arbeitsplatte, welche insbesondere als eine Küchenarbeitsplatte ausgebildet ist, aufweist, welche in einem montierten Zustand oberhalb des Kochfelds angeordnet ist. Hierdurch kann insbesondere ein Benutzerkomfort gesteigert werden. Vorteilhaft kann die Arbeitsplatte wahlweise zu einem Schneiden und/oder Mischen und/oder Rühren und einer Beheizung von Gargut verwendet werden.

Vorteilhaft ist die Arbeitsplatte frei von die Kochzone kennzeichnenden Markierungen. Hierdurch kann insbesondere eine Designfreiheit der Arbeitsplatte erhöht werden.

Die Erfindung geht ferner aus von einem Verfahren zur Verwendung einer Unterlegvorrichtung, insbesondere der Unterlegvorrichtung, zur Verwendung mit einem Kochfeld, wobei die Unterlegvorrichtung eine Unterlegeinheit aufweist, welche zwischen einem Gargeschirr und einer Kochzone des Kochfelds platziert wird.

Es wird vorgeschlagen, dass eine Platzierung der Unterlegeinheit relativ zu der Kochzone durch die Platzierhilfe unterstützt wird. Hierdurch kann ein Benutzerkomfort erhöht werden. Vorteilhaft kann eine Platzierung der Unterlegeinheit auf eine einfache und intuitive Weise unterstützt werden.

Die Unterlegvorrichtung soll hierbei nicht auf die oben beschriebene Anwendung und Ausführungsform beschränkt sein. Insbesondere kann die Unterlegvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Darstellung eines Systems mit einer Unterlegvorrichtung und einem Kochfeld von oben,
- Fig. 2: eine Schnittdarstellung des Systems entlang der Schnittlinie A-A in der Fig. 1,
- Fig. 3: ein schematisches Verlaufsdiagramm eines Verfahrens zur Verwendung der Unterlegvorrichtung und
- Fig. 4: eine Schnittdarstellung eines weiteren Ausführungsbeispiels eines Systems mit einer Unterlegvorrichtung und einem Kochfeld entlang einer Schnittline analog zu der Schnittlinie A-A in der Fig. 1.

Von mehrfach vorhandenen Objekten ist in den Figuren jeweils lediglich eines mit einem Bezugszeichen versehen.

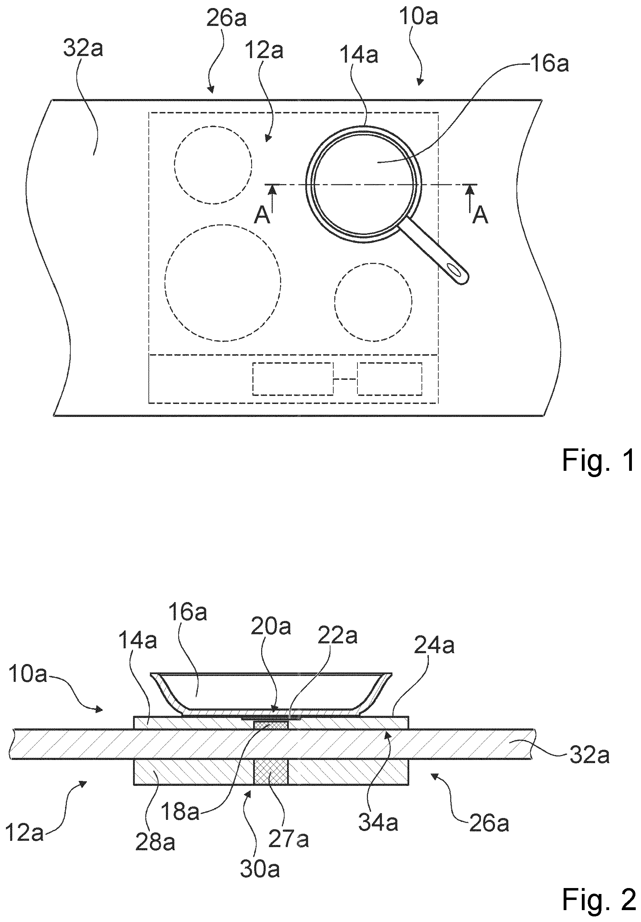

Figur 1 zeigt ein System 26a. Das System 26a weist ein Kochfeld 12a auf. Das Kochfeld 12a ist als ein Induktionskochfeld ausgebildet. Das Kochfeld 12a weist eine Heizeinheit 28a auf, welche in Figur 2 näher dargestellt ist. Die Heizeinheit 28a ist als ein Heizinduktor ausgebildet. Das Kochfeld 12a weist eine Kochzone auf. Die Kochzone ist durch die Heizeinheit 28a definiert. Die Kochzone entspricht einem Bereich oberhalb der Heizeinheit 28a. Das System 26a weist eine Arbeitsplatte 32a auf. Die Arbeitsplatte 32a ist als eine Küchenarbeitsplatte ausgebildet. Die Arbeitsplatte 32a ist oberhalb des Kochfelds 12a angeordnet. Das Kochfeld 12a ist an einer Unterseite der Arbeitsplatte 32a montiert. Alternativ könnte das Kochfeld 12a eine Kochfeldplatte aufweisen und in einer Ausnehmung der Arbeitsplatte 32a montiert sein. Die Arbeitsplatte 32a ist frei von die Kochzone kennzeichnenden Markierungen.

Das System 26a weist eine Unterlegvorrichtung 10a auf, welche in Figur 2 näher dargestellt ist. Die Unterlegvorrichtung 10a dient einer Verwendung mit dem Kochfeld 12a. Die Unterlegvorrichtung 10a ist plattenförmig ausgebildet. Die Unterlegvorrichtung 10a weist ein Hochtemperatur-Silikon auf. Alternativ oder zusätzlich könnte die Unterlegvorrichtung 10a Holz und/oder Kork aufweisen. Die Unterlegvorrichtung 10a weist eine Unterlegeinheit 14a auf. Die Unterlegeinheit 14a bildet eine Außenkontur der Unterlegvorrichtung 10a vollständig aus. Alternativ könnte die Unterlegvorrichtung 10a weitere Einheiten, insbesondere Überhänge, aufweisen, welche einstückig mit der Unterlegeinheit 14a verbunden sein könnten. Die Unterlegeinheit 14a ist kreisscheibenförmig ausgebildet. Alternativ könnte die Unterlegeinheit 14a beliebige andere Formen, beispielsweise eine Rechteckscheibenform, insbesondere Quadratscheibenform, aufweisen. Die Unterlegeinheit 14a ist zu einer Platzierung zwischen einem Gargeschirr 16a und der Kochzone des Kochfelds 12a vorgesehen. Die Unterlegeinheit 14a weist eine Gargeschirrauflagefläche 24a auf. Das Gargeschirr 16a ist auf der Gargeschirrauflagefläche 24a platziert.

Die Unterlegvorrichtung 10a weist eine Platzierhilfe 18a auf. Die Platzierhilfe 18a dient einer Unterstützung einer Platzierung der Unterlegeinheit 14a relativ zu der Kochzone. Die Platzierhilfe 18a ist in einem Zentralbereich 20a der Unterlegeinheit 14a angeordnet. Die Platzierhilfe 18a ist konzentrisch zur Unterlegeinheit 14a angeordnet. Die Platzierhilfe 18a ist kreisscheibenförmig ausgebildet. Alternativ könnte die Platzierhilfe 18a beliebige andere Formen, beispielsweise eine Rechteckscheibenform, insbesondere Quadratscheibenform, aufweisen. Die Platzierhilfe 18a ist an einer Unterseite 34a der Unterlegeinheit 14a angeordnet. Die Unterseite 34a ist der Gargeschirrauflagefläche 24a gegenüberliegend angeordnet. Alternativ könnte die Platzierhilfe 18a vollständig in einem Innenbereich der Unterlegeinheit 14a oder an der Gargeschirrauflagefläche 24a der Unterlegeinheit 14a angeordnet sein.

Die Platzierhilfe 18a stellt zur Unterstützung der Platzierung in einer vordefinierten Position der Unterlegeinheit 14a relativ zu der Kochzone eine Haltekraft bereit. Alternativ könnte die Platzierhilfe 18a in der vordefinierten Position ein Signal an einen Benutzer ausgeben. Die vordefinierte Position entspricht einer Position, in der bei einer senkrechten Betrachtung auf eine Haupterstreckungsebene der Unterlegeinheit 14a Mittelpunkte der Unterlegeinheit 14a und der Kochzone identisch zueinander sind. Die Haltekraft ist durch den Benutzer händisch überwindbar. Die Haltekraft beträgt 5 N. Die Platzierhilfe 18a weist ein magnetisches Halteelement auf. Das Halteelement dient einer Bereitstellung der Haltekraft. Das Halteelement bildet die Platzierhilfe 18a vollständig aus. Alternativ könnte die Platzierhilfe 18a eine Vielzahl von Halteelementen aufweisen. Das Halteelement ist als ein Permanentmagnet ausgebildet. Das Halteelement ist als ein SmCo-Magnet ausgebildet.

Die Unterlegvorrichtung 10a weist ein Abschirmelement 22a auf. Das Abschirmelement 22a ist zwischen der Platzierhilfe 18a der Gargeschirrauflagefläche 24a angeordnet. Das Abschirmelement 22a dient einer elektromagnetischen Abschirmung der Platzierhilfe 18a. Das Abschirmelement 22a verhindert ein Haften der Unterlegeinheit 14a an dem Gargeschirr 16a. Das Abschirmelement 22a ist plattenförmig ausgebildet. Das Abschirmelement 22a ist kreisscheibenförmig ausgebildet. Alternativ könnte das Abschirmelement 22a beliebige andere Formen, beispielsweise eine Rechteckscheibenform, insbesondere Quadratscheibenform, aufweisen. Das Abschirmelement 22a bedeckt die Platzierhilfe 18a in der senkrechten Betrachtung vollständig. Das Abschirmelement 22a weist ein Mu-Metall auf. Alternativ oder zusätzlich könnte das Abschirmelement 22a einen Ferrit aufweisen.

Das Kochfeld 12a weist eine weitere Platzierhilfe 27a auf. Die weitere Platzierhilfe 27a stellt gemeinsam mit der Platzierhilfe 18a die Unterstützung der Platzierung der Unterlegeinheit 14a relativ zu der Kochzone bereit. Die weitere Platzierhilfe 27a ist, bis auf eine Höhe, identisch zu der Platzierhilfe 18a ausgebildet. Alternativ könnte die weitere Platzierhilfe 27a als eine andere Art von Permanentmagnet oder ein Ferrit ausgebildet sein. Die weitere Platzierhilfe 27a ist in einem Zentralbereich 30a der Heizeinheit 28a angeordnet. Die Heizeinheit 28a umschließt die weitere Platzierhilfe 27a in einer senkrechten Betrachtung auf eine Haupterstreckungsebene der Heizeinheit 28a vollständig.

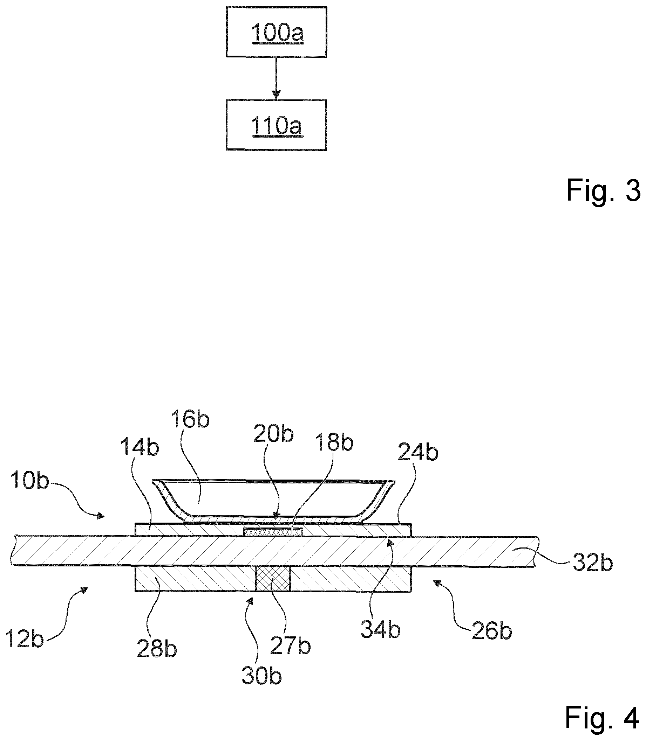

Figur 3 zeigt ein schematisches Verlaufsdiagramm eines Verfahrens zur Verwendung der Unterlegvorrichtung 10a. In einem Platzierschritt 100a wird die Unterlegvorrichtung 10a über die Arbeitsplatte 32a bewegt, bis die Unterlegvorrichtung 10a in der vordefinierten Position ankommt und durch die Platzierhilfe 18a festgehalten wird. In einem Aufstellschritt 110a wird das Gargeschirr 16a auf der Unterlegvorrichtung 10a platziert. Der Aufstellschritt 110a folgt auf den Platzierschritt 100a. Im Anschluss an den Aufstellschritt 110a kann das System 36a in einen Heizbetriebszustand überführt werden, in welchem das Gargeschirr 16a optimal beheizt wird.

In Figur 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figur 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt eine weiteres Ausgestaltungsbeispiel eines Systems 26b. Das System 26b ist frei von Abschirmelementen. Das System 26b weist eine Platzierhilfe 18b auf. Die Platzierhilfe 18b ist als ein Ferrit ausgebildet. Das System 26b weist eine weitere Platzierhilfe 27b auf. Die weitere Platzierhilfe 27b ist unterschiedlich zu der Platzierhilfe 18b ausgebildet.

### Bezugszeichen

- 10: Unterlegvorrichtung
- 12: Kochfeld
- 14: Unterlegeinheit
- 16: Gargeschirr
- 18: Platzierhilfe
- 20: Zentralbereich
- 22: Abschirmelement
- 24: Gargeschirrauflagefläche
- 26: System
- 27: weitere Platzierhilfe
- 28: Heizeinheit
- 30: Zentralbereich
- 32: Arbeitsplatte
- 34: Unterseite
- 100: Platzierschritt
- 110: Aufstellschritt

## Patentansprüche

1. Unterlegvorrichtung (10a; 10b) zur Verwendung mit einem Kochfeld (12a; 12b), mit einer Unterlegeinheit (14a; 14b), welche zu einer Platzierung zwischen einem Gargeschirr (16a; 16b) und einer Kochzone des Kochfelds (12a; 12b) vorgesehen ist, wobei eine Platzierhilfe (18a; 18b), welche zur Unterstützung einer Platzierung der Unterlegeinheit (14a; 14b) relativ zu der Kochzone vorgesehen ist, **dadurch gekennzeichnet, dass** die Platzierhilfe (18a; 18b) zur Unterstützung der Platzierung in einer vordefinierten Position der Unterlegeinheit (14a; 14b) relativ zu der Kochzone eine Haltekraft bereitstellt und dass die Platzierhilfe (18a; 18b) zumindest ein magnetisches Halteelement aufweist, welches zur Bereitstellung der Haltekraft vorgesehen ist.

2. Unterlegvorrichtung (10a; 10b) nach Anspruch 1, **dadurch gekennzeichnet, dass** die Platzierhilfe (18a; 18b) in einem Zentralbereich (20a; 20b) der Unterlegeinheit (14a; 14b) angeordnet ist.

3. Unterlegvorrichtung (10a) nach Anspruch 1, **dadurch gekennzeichnet, dass** das Halteelement als ein Permanentmagnet ausgebildet ist.

4. Unterlegvorrichtung (10a) nach einem der vorhergehenden Ansprüche, **gekennzeichnet durch** ein Abschirmelement (22a), welches zwischen der Platzierhilfe (18a) und einer Gargeschirrauflagefläche (24a) der Unterlegeinheit (14a) angeordnet und dazu vorgesehen ist, die Platzierhilfe (18a) elektromagnetisch abzuschirmen.

5. System (26a; 26b) mit einer Unterlegvorrichtung (10a; 10b) nach einem der vorhergehenden Ansprüche und mit dem Kochfeld (12a; 12b).

6. System (26a; 26b) nach Anspruch 5, **dadurch gekennzeichnet, dass** das Kochfeld (12a; 12b) eine weitere Platzierhilfe (27a; 27b) aufweist, welche dazu vorgesehen ist, gemeinsam mit der Platzierhilfe (18a; 18b) die Unterstützung der Platzierung der Unterlegeinheit (14a; 14b) relativ zu der Kochzone bereitzustellen.

7. System (26a; 26b) nach Anspruch 6, **dadurch gekennzeichnet, dass** das Kochfeld (12a; 12b) eine Heizeinheit (28a; 28b) aufweist, wobei die weitere Platzierhilfe (27a; 27b) in einem Zentralbereich (30a; 30b) der Heizeinheit (28a; 28b) angeordnet ist.

8. System (26a; 26b) nach einem der Ansprüche 5 bis 7, **gekennzeichnet durch** eine Arbeitsplatte (32a; 32b), welche in einem montierten Zustand oberhalb des Kochfelds (12a; 12b) angeordnet ist.

9. System (26a; 26b) nach Anspruch 8, **dadurch gekennzeichnet, dass** die Arbeitsplatte (32a; 32b) frei von die Kochzone kennzeichnenden Markierungen ist.

10. Verfahren zur Verwendung einer Unterlegvorrichtung (10a; 10b), insbesondere nach einem der Ansprüche 1 bis 4, mit einem Kochfeld (12a; 12b), wobei die Unterlegvorrichtung (10a; 10b) eine Unterlegeinheit (14a; 14b) aufweist, welche zwischen einem Gargeschirr (16a; 16b) und einer Kochzone des Kochfelds (12a; 12b) platziert wird, **dadurch gekennzeichnet, dass** eine Platzierung der Unterlegeinheit (14a; 14b) relativ zu der Kochzone durch die Platzierhilfe (18a; 18b) unterstützt wird, wobei durch die Platzierhilfe (18a; 18b) zur Unterstützung der Platzierung in einer vordefinierten Position der Unterlegeinheit (14a; 14b) relativ zu der Kochzone eine Haltekraft bereitgestellt wird und wobei zur Platzierung die Platzierhilfe (18a; 18b) zumindest ein magnetisches Halteelement aufweist, welches zur Bereitstellung der Haltekraft vorgesehen ist.

## Claims

1. Underlay apparatus (10a; 10b) for use with a hob (12a; 12b), comprising an underlay unit (14a; 14b) which is provided for positioning between a cooking vessel (16a; 16b) and a cooking zone of the hob (12a; 12b), wherein a positioning aid (18a; 18b) which is provided for supporting a positioning of the underlay unit (14a; 14b) relative to the cooking zone, **characterised in that** the positioning aid (18a; 18b) provides a holding force for supporting the positioning in a predefined position of the underlay unit (14a; 14b) relative to the cooking zone and that the positioning aid (18a; 18b) has at least one magnetic holding element which is provided for providing the holding force.

2. Underlay apparatus (10a; 10b) according to claim 1, **characterised in that** the positioning aid (18a; 18b) is arranged in a central region (20a; 20b) of the underlay unit (14a; 14b).

3. Underlay apparatus (10a) according to claim 1, **characterised in that** the holding element is configured as a permanent magnet.

4. Underlay apparatus (10a) according to one of the preceding claims, **characterised by** a shielding element (22a) which is arranged between the positioning aid (18a) and a cooking vessel support surface (24a) of the underlay unit (14a) and is provided to shield the positioning aid (18a) electromagnetically.

5. System (26a; 26b) comprising an underlay apparatus (10a; 10b) according to one of the preceding claims and comprising the hob (12a; 12b).

6. System (26a; 26b) according to claim 5, **characterised in that** the hob (12a; 12b) has a further positioning aid (27a; 27b) which is provided, together with the positioning aid (18a; 18b), to provide the support of the positioning of the underlay unit (14a; 14b) relative to the cooking zone.

7. System (26a; 26b) according to claim 6, **characterised in that** the hob (12a; 12b) has a heating unit (28a; 28b), wherein the further positioning aid (27a; 27b) is arranged in a central region (30a; 30b) of the heating unit (28a; 28b).

8. System (26a; 26b) according to one of claims 5 to 7, **characterised by** a worktop (32a; 32b) which is arranged above the hob (12a; 12b) in a mounted state.

9. System (26a; 26b) according to claim 8, **characterised in that** the worktop (32a; 32b) is free of markings identifying the cooking zone.

10. Method for using an underlay apparatus (10a; 10b), in particular according to one of claims 1 to 4, comprising a hob (12a; 12b), wherein the underlay apparatus (10a; 10b) has an underlay unit (14a; 14b) which is positioned between a cooking vessel (16a; 16b) and a cooking zone of the hob (12a; 12b), **characterised in that** a positioning of the underlay unit (14a; 14b) relative to the cooking zone is supported by the positioning aid (18a; 18b), wherein a holding force is provided by the positioning aid (18a; 18b) for supporting the positioning in a predefined position of the underlay unit (14a; 14b) relative to the cooking zone and wherein, for the positioning, the positioning aid (18a; 18b) has at least one magnetic holding element which is provided for providing the holding force.

## Revendications

1. Dispositif de support (10a ; 10b) pour une utilisation avec un champ de cuisson (12a ; 12b), avec une unité de support (14a ; 14b) prévue pour être placée entre un élément de batterie de cuisine (16a ; 16b) et une zone de cuisson du champ de cuisson (12a ; 12b), dans lequel une aide au placement (18a ; 18b) est prévue pour assister un placement de l'unité de support (14a ; 14b) par rapport à la zone de cuisson, **caractérisé en ce que** l'aide au placement (18a ; 18b) met à disposition une force de retenue pour assister le placement dans une position prédéfinie de l'unité de support (14a ; 14b) par rapport à la zone de cuisson, et **en ce que** l'aide au placement (18a ; 18b) présente au moins un élément de retenue magnétique prévu pour la mise à disposition de la force de retenue.

2. Dispositif de support (10a ; 10b) selon la revendication 1, **caractérisé en ce que** l'aide au placement (18a ; 18b) est disposée dans une zone centrale (20a ; 20b) de l'unité de support (14a ; 14b).

3. Dispositif de support (10a) selon la revendication 1, **caractérisé en ce que** l'élément de retenue est formé sous la forme d'un aimant permanent.

4. Dispositif de support (10a) selon l'une des revendications précédentes, **caractérisé par** un élément de blindage (22a) qui est disposé entre l'aide au placement (18a) et une surface d'appui pour éléments de batterie de cuisine (24a) de l'unité de support (14a) et prévu pour blinder électromagnétiquement l'aide au placement (18a).

5. Système (26a ; 26b) avec un dispositif de support (10a ; 10b) selon l'une des revendications précédentes et avec le champ de cuisson (12a ; 12b).

6. Système (26a ; 26b) selon la revendication 5, **caractérisé en ce que** le champ de cuisson (12a ; 12b) présente une aide au placement supplémentaire (27a ; 27b) qui est prévue pour mettre à disposition, avec l'aide au positionnement (18a ; 18b), l'assistance au placement de l'unité de support (14a ; 14b) par rapport à la zone de cuisson.

7. Système (26a ; 26b) selon la revendication 6, **caractérisé en ce que** le champ de cuisson (12a ; 12b) présente une unité de chauffe (28a ; 28b), dans lequel l'aide au placement supplémentaire (27a ; 27b) est disposée dans une zone centrale (30a ; 30b) de l'unité de chauffe (28a ; 28b).

8. Système (26a ; 26b) selon l'une des revendications 5 à 7, **caractérisé par** un plan de travail (32a ; 32b) qui, dans un état monté, est disposé au-dessus du champ de cuisson (12a ; 12b).

9. Système (26a ; 26b) selon la revendication 8, **caractérisé en ce que** le plan de travail (32a ; 32b) est exempt de marquages indiquant la zone de cuisson.

10. Procédé pour l'utilisation d'un dispositif de support (10a ; 10b), en particulier selon l'une des revendications 1 à 4, avec un champ de cuisson (12a ; 12b), dans lequel le dispositif de support (10a ; 10b) présente une unité de support (14a ; 14b) qui est placée entre un élément de batterie de cuisine (16a ; 16b) et une zone de cuisson du champ de cuisson (12a ; 12b), **caractérisé en ce qu'un** placement de l'unité de support (14a ; 14b) par rapport à la zone de cuisson est assisté par l'aide au placement (18a ; 18b), dans lequel l'aide au placement (18a ; 18b) met à disposition une force de retenue pour assister le placement dans une position prédéfinie de l'unité de support (14a ; 14b) par rapport à la zone de cuisson, et dans lequel, pour le placement, l'aide au placement (18a ; 18b) présente au moins un élément de retenue magnétique prévu pour la mise à disposition de la force de retenue.
